# EUROPEAN PATENT SPECIFICATION

(11) **EP 2 928 310 B1**
(45) Date of publication and mention of the grant of the patent: **12.09.2018**
(21) Application number: 13860956.5
(22) Date of filing: 05.12.2013
(51) Int. Cl.: A23B 4/00, A23L 13/70, A23L 13/00

(54) **METHOD AND SYSTEM FOR PROCESSING READY-TO-EAT BACON WITH PAN FRIED BACON CHARACTERISTICS**
VERFAHREN UND SYSTEM ZUR VERARBEITUNG VON ESSFERTIGEM SPECK MIT EIGENSCHAFTEN VON IN DER PFANNE GEBRATENEM SPECK
PROCÉDÉ ET SYSTÈME DE TRANSFORMATION DE BACON PRÊT-À-MANGER PRÉSENTANT DES CARACTÉRISTIQUES DE BACON POÊLÉ

(30) Priority: 07.12.2012 US 201261734584 P
(43) Date of publication of application: 14.10.2015
(73) Proprietor: Smithfield Foods Inc., Smithfield VA 23430 (US)
(72) Inventor: FRITZ, Michael, Delphi, IN 46922 (US); WHITE, Anthony, Kokomo, IN 46901 (US); PHILLIPS, Jeffrey, Lisle, IL 60532 (US); CATTIN, James, Peru, IN 46970 (US); BLONG, Robert, Peru, IN 46970 (US); JOHNSON, Bruce A., Lisle, IL 60532 (US)
(74) Representative: Vossius & Partner Patentanwälte Rechtsanwälte mbB
(86) International application number: PCT/US2013/073340
(87) International publication number: WO 2014/089308

(56) References cited:
- US-A- 3 141 779
- US-A- 4 879 128
- US-A- 4 957 756
- US-A- 5 997 925
- US-A- 6 045 841
- US-A1- 2006 165 862
- US-A1- 2012 040 062
- US-A1- 2012 040 062

## Description

### FIELD OF THE INVENTION

The present invention relates to methods and systems for processing ready-to-eat bacon with pan-fried bacon characteristics comprising a combination of cooking in a microwave oven and finishing in a searing unit.

### BACKGROUND OF THE INVENTION

Continuous manufacturing processes for pre-cooking or cooking bacon comprise a method where green bellies are received, optionally skinned, injected with brine/cure, hung, thermally processed in a smokehouse where natural and/or liquid smoke is applied, removed from the smokehouse and chilled, pressed, stored in a refrigerated cooler, sliced, and deposited onto a cooking device including a conveyor belt. The slices are transferred along a processing direction via a conveyor belt. A conveyor belt feeds the slices into a continuous cooking device where they are cooked for a sufficient time to obtain desired organoleptic properties. Examples of continuous cooking devices include microwave ovens, belt grill ovens, and impingement convection ovens. The cooked bacon slices are transferred via a conveyor belt to a packaging station.

Food packagers sell cooked bacon to restaurants (*e*.*g*., fast-food restaurants). The restaurants use portion sized products such as the bacon on sandwiches. In order to save time, the products, such as bacon, can be pre-cooked thereby saving an employee time of having to cook the product when preparing a meal. In the fast-food restaurant industry, where time is important and the demand for portion sized products, such as bacon, is high, cooking bacon wastes valuable time. Cost of cleanup and disposal of rendered bacon fat are also concerns in the fast-food restaurant industry. Thus, there exists in the industry a demand for pre-cooked bacon.

Pre-cooked bacon is currently produced using microwave energy to thermally process bacon strips sliced from smoked de-rind bacon slabs. The processed bacon slabs are sliced onto a microwave oven belt where the strips are moved into a microwave oven cavity to be thermally processed into pre-cooked bacon. As the slices enter the microwave oven cavity they are bombarded with microwave energy causing friction, and in return, cooking the strips until the desired temperature or finished attributes are attained. Finished pre-cooked bacon has to be cooked to a finished yield of less than 40% and attain a finished temperature of greater than, or equal to, 160°F. The process time varies based on the thickness and size of the product entering the microwave oven cavity. Once the product has passed through the microwave it is sorted, sheeted, and packaged. Although the pre-cooked bacon has advantages such as convenience and time-saving value, one of the disadvantages of the current process is that the flavor profile of pre-cooked bacon tends to be less intense and less desirable than that of raw bacon that has been prepared on a griddle or in a frying pan.

US 2012/040062 A1 discloses a method of making pre-cooked meat pieces using a hybrid cooking system, comprising: preheating meat pieces to a temperature of at least approximately 140° F. to create preheated meat pieces; transferring the preheated meat pieces to an oven heated with an external heating source, the oven including internal surfaces, the external heating source assisting in keeping the internal surfaces at a temperature below a smoke point of fat from the meat pieces; and cooking the preheated meat pieces in the oven to a water activity level of 0.92 or less to create pre-cooked meat pieces. US 6 045 841 A discloses a method for pre-cooking sliced bacon comprising the steps of: partially cooking sliced bacon starting material by heating in a microwave oven; applying an organoleptic enhancing liquid to the surfaces of the sliced bacon starting material either during or after the cooking in the microwave oven; and completing the cooking by heating the partially cooked sliced bacon in a browning oven, to produce pre-cooked sliced bacon having a crisp texture. Consumer demand for bacon slices with a "pan-fried" taste and consistency is not satisfactorily provided by current methods of pre-cooking bacon slices. Accordingly, there has been a long-felt need in the food service industry for a method of simulating pan-fried bacon with the convenience and cost-savings of precooked bacon.

### SUMMARY OF THE INVENTION

The invention relates to a method for simulating pan-fried bacon comprising precooking bacon slices in a microwave oven followed by finishing in a searing unit.

In one embodiment, the method for preparing bacon may comprise (a) providing a bacon slab; (b) slicing said bacon slab into bacon slices; (c) cooking said bacon slices in a microwave oven; and (d) finishing said bacon slices in a searing unit, as claimed.

In one embodiment, the slicer may slice the bacon slab at about 160-210 slices per minute. In another embodiment, the slicer may slice the bacon slab to a thickness of about 8-16 slices per inch.

In one embodiment, the microwave oven may cook the bacon slices to an internal temperature of about 100-210°F, optionally about 160-180°F, 160°F, or 165°F. In another embodiment, the microwave oven may cook the bacon slices for 60-105 seconds, 80-90 seconds, or 120 seconds. In another embodiment, the microwave oven may be a conveyor microwave oven. In another embodiment, the conveyor microwave oven belt may move at about 30-60 feet per minute, 30-50 feet per minute, or 40-42 feet per minute. In another embodiment, the cooking searing unit may cook said bacon slices to an internal temperature of about greater than 160°F or 165°F.

In one embodiment, the flame temperature of the searing unit may be about 300-1000°F, optionally 300-1000°F or 450-500°F. In another embodiment, the cooking searing unit may cook said bacon slices for 4-12 seconds, 6-9 seconds, or 12 seconds. In another embodiment, the cooking searing unit may be a conveyor cooking searing unit. In another embodiment, the conveyor cooking searing unit belt may move at about 30-56 feet per minute.

In one embodiment, a roller press may be used.

In one embodiment, wherein prior to slicing a cure solution may be injected into a green pork belly.

In one embodiment, the method further may comprise interleaving bacon slices onto parchment paper to form sheets of bacon slices.

In one embodiment, the method further may comprise stacking said sheets of bacon slices.

In one embodiment, the method further may comprise packaging said sheets of bacon slices.

In one embodiment, the microwave oven may be coupled to a thermal imaging device, vision system, near-infrared (NIR) imaging, vision systems, inline checkweigher, infrared sensor, or a feedback control system.

In one embodiment, the searing unit may be coupled to a thermal imaging device, vision system, near-infrared (NIR) imaging, vision systems, inline checkweigher, infrared sensor, or a feedback control system.

In one embodiment, the method further may comprise stacking sheets of bacon slices. In another embodiment, the method further may comprise transferring said sheets of bacon slices to a packaging machine for sealing in a modified atmosphere package. In another embodiment, the method further may comprise casing, taping, and palletizing packages.

In one embodiment, a series of parallel microwave oven-searing unit assemblages are arranged.

In one embodiment, a multi-cavity microwave oven may be used, optionally a 2-cavity or 5-cavity microwave oven.

In one embodiment, a system for making pre-cooked bacon comprising (a) a slicer for slicing bacon slabs; (b) a microwave oven for cooking bacon slices; (c) a searing cooking unit for searing bacon slices; (d) an interleaver for interleaving and stacking the bacon slices; and (d) a packaging machine for packaging the bacon slices, as claimed.

In another embodiment, said system may comprise a series of parallel microwave oven-searing unit assemblages are arranged.

In one embodiment, the microwave oven may be a multi-cavity microwave oven, optionally a 2-cavity or 5-cavity microwave oven.

### BRIEF DESCRIPTION OF THE FIGURES

**Figure 1** is a flow chart of exemplary method for simulating pan-fried bacon.
**Figure 2** depicts an exemplary plant lay-out.
**Figure 3** depicts a detail of a microwave oven including monitoring equipment.
**Figure 4** depicts a detail of a searing unit including monitoring equipment.

### DETAILED DESCRIPTION OF THE PREFERRED EMBODIMENT

In order that the invention herein described may be fully understood, the following detailed description is set forth. Various embodiments of the invention are described in detail and may be further illustrated by the provided examples. Additional viable variations of the embodiments can easily be envisioned.

### Definitions

Unless defined otherwise, all technical and scientific terms used herein have the same meaning as those commonly understood by one of ordinary skill in the art to which this invention belongs.

As used in the description herein and throughout the claims that follow, the meaning of "a," "an," and "the" includes plural reference unless the context clearly dictates otherwise.

"Bacon," as used herein, refers broadly to cured meat of several parts of a pig. In America, bacon most commonly refers to the cured and smoked pork belly. The pork is cured by applying a curing agent to the meat via a dry rub, immersion in a brine solution, or injection with a brine solution. The curing agent, such as sodium nitrite and/or saltpeter, is a color fixative that gives cured meat its pink color. The bacon is, then, usually smoked or dried. Other ingredients and flavors can be added during the injection process. Common smoke flavors are that of different types of wood: with applewood and hickory being two popular smoke flavors.

Bacon can be made from several different cuts of meat. Streaky bacon, pancetta, and American bacon come from the pork belly. Middle bacon comes from the side of the pig. Back bacon is made from the loin of the pig. Also called Irish Bacon or Canadian bacon, it is meatier and leaner than other bacon. Cottage bacon is thinly sliced lean pork meat from the shoulder of a pig. Jowl bacon is the cured and smoked cheeks of a pig.

"Finishing," as used herein, refers broadly to the second process of cooking a food product, after an initial cooking period. For example, "finishing" may refer to cooking a partially cooked food product by a different method than the first method (*e*.*g*., searing after microwaving a food product).

"Pan-fried bacon," as used herein, refers broadly to bacon prepared by frying. Bacon prepared in this manner has a smoky flavor, a brown color, and crispy texture. Pan-frying is a popular method of preparing bacon in the United States.

### Simulating Pan-Fried Bacon

The invention provides methods and systems to simulate the taste of pan-fried bacon using a combination of microwave oven cooking and a searing process. Pan-fried bacon has a distinct flavor, odor, appearance, texture, and color. Bacon prepared in a microwave does not share these same properties and is also considered less desirable by consumers than pan-fried bacon. Further microwave bacon generally does not get the desired brown appearance or the crispy texture of pan-fried bacon. In order to achieve a pan fried flavor, food service operators and consumers must cook raw bacon on a grill or in a pan. This produces grease that must be collected and disposed. Precooked bacon that delivers pan fried attributes will only need to be heated with no appreciable grease generated. This would reduce the cost of preparing bacon for food service operators, and also provide convenience for in home consumers.

The inventors surprisingly discovered that the combination of microwave oven cooking at about an internal temperature of 160-180°F. optionally about 160°F, and finishing in a searing unit, the flame temperature is about 500-1000°F depending on flame setting, results in a rapid method for preparing bacon that has strong characteristics of pan-fried bacon. The success in simulating the taste, texture, appearance, and odor of pan-fried bacon using combination of microwave oven cooking and a searing unit was unexpected because searing the bacon was expected to char the bacon and not finish the bacon in such a manner as it satisfactory simulated the flavor, odor, and texture of pan-fried bacon. Further, microwave oven cooking has failed to generate bacon with satisfactory appearance, odor, texture, and flavor characteristics similar to those of pan-fried bacon.

### Process for development of simulation of pan-fried bacon

A demand exists in the market for pre-cooked bacon with similar savory notes found in pan-fried bacon. The inventors made a number of attempts to simulate this pan-fried flavor in pre-cooked bacon via numerous tests using different pickle formulations and ingredients, but with no success.

Among the attempts to develop bacon with pan-fried notes, the inventors made a test pickle using Red Arrow® "Caramelized Butter" attempting to duplicate some of the caramelized-type flavor present in pan-fried bacon. Additionally, they made a test pickle using a Red Arrow® "Butter Flavor." Neither of these attempts successfully captured the flavor notes of pan-fried bacon.

Moving on, the inventors performed a product cutting using pre-cooked bacon samples prepared with Red Arrow® "Bacon Enhancer/Pan-Fried Bacon" flavor. Bacon cheeseburgers, without condiments, were used for a sandwich build. The pre-cooked bacon prepared with the "Bacon Enhancer/Pan-Fried Bacon" flavor was compared to standard pre-cooked bacon and to an applewood raw bacon prepared on a griddle. The applewood raw bacon was preferred and the flavor of the "Pan-Fried" flavored bacon did not carry strongly on a sandwich build. Again, the attempt was not successful.

In another attempt, the inventors injected pork bellies with a second variation of "Bacon Enhancer/Pan-Fried Bacon" flavor. Subsequently, another cutting was performed using bacon cheeseburgers. Although the test product was excellent as a center of the plate product, the flavor did not have the intensity or savory notes that pan-fried bacon had in a sandwich build; resulting in an another failed attempt.

The inventors also used microwave packaging technology, utilizing susceptors, to enhance the reheating of pre-cooked bacon in order to deliver a "pan-fried" flavor. The inventors purchased microwavable prepared foods that had packaging that utilized susceptor technology. They prepared bacon using the microwave packaging from these products. Some improvement in flavor and savory notes was achieved, but it still did not satisfactory simulate a pan-fried flavor.

Another attempt was made using various types of microwave packaging. The inventors considered embedding susceptor technology within the parchment paper to deliver an improved flavor by changing packaging. This route of delivering a "pan-fried flavor" was not successfully completed.

In yet another attempt, the inventors ran a series of four different pickle formulations utilizing a third variation of "Bacon Enhancer/Pan-Fried Bacon" flavor. The formulations contained differing levels of the "Pan-Fried Bacon" flavor, as well as, smoke flavorings. Later, a fifth pickle formulation was run utilizing this same variation of "Bacon Enhancer/Pan-Fried Bacon" flavor. None of these attempts were successful in simulating a pan-fried flavor.

None of the formulation, packaging, or ingredient modifications attempted, utilizing only microwave oven cooking methods, were successful; and the inventors turned to the combination of microwave oven cooking with a searing cooking period to simulate pan-fried bacon. The combination of cooking by microwave oven and finishing by searing produced the unexpected result of simulating the flavor, consistency, color, appearance, and aroma of pan-fried bacon. Accordingly, the inventors varied numerous parameters and tried several of a number of possible choices until they arrived at a successful result where the prior art gave either no indication of which parameters were critical or no direction as to which of the many possible choices was likely to be successful.

### Process for Simulating Pan-Fried Bacon

Processed slabs are sliced onto a microwave belt were the product is moved into the microwave oven cavity to be processed into pre-cooked bacon. As the slices enter the microwave oven cavity they are bombarded with microwave energy causing friction, and in return, cooking the strips until the product attains a 40% to 60% yield (*e.g.,* 45% yield). The product then exits the microwave oven cavity and transition onto a stainless steel belt entering into an open flame-searing machine reducing the cook yield and increasing the cook temperature. Both the cook temperature and yield will be achieved before exiting the searing chamber. Upon exiting the searing chamber the strips are transitioned back onto a takeaway conveyor to be sorted, sheeted, and packaged.

### Description of Bacon Products

Bacon prepared by microwave alone is flat with uniform appearance. The current method of microwave alone looks and tastes nothing like frying bacon in a pan. In contrast, the methods described herein replicates pan fried preparation results in a product with a wavy appearance, non-uniform color with some darker edges (similar to pan fried preparation), flavor notes that convey similar caramelization as found in pan frying. The cooked color of bacon slices prepared in accordance with the methods described herein is a medium to dark reddish brown with golden brown fat. Texture has crisp, firm bite. Product has aroma of fresh cooked bacon. The bacon products made by the methods described herein exhibit a wavy pan - fried appearance with a light ring around the external edge of the strip. Texture has crisp firm bite with a charred smoky flavor. Thus, the pan-fried bacon slice product exhibits a slight dark ring around the perimeter of the strip. The product is light brown with a wavy appearance as if the product was cooked in a frying pan. The bacon prepared by the methods describd herein carry a savory smoke flavor with notes of sweetness and salt similar to pan-fried bacon.

*Thickness*-The bacon slices may have a thickness of about 1/32", 1/16", 1/14", 1/9", or 1/8". The bacon slab may be cut to a thickness of about 8-9 slices per inch. The bacon slab may be cut to a thickness of about 14-16 slices per inch.

*Hear*-The bacon slices may be cooked in a microwave oven to an internal temperature of about 100-210°F. optionally about 160-180°F, optionally about 160°F. The bacon slices may be cooked in a microwave oven to an internal temperature of about 100, 110, 120, 121, 122, 123, 124, 125, 126, 127, 128, 129, 130, 131. 132, 133, 134, 135, 136, 137, 138. 139, 140, 141, 142, 143, 144, 145, 146, 147, 148, 149. 140, 150, 150. 151. 152, 153, 154, 155, 156, 157, 158, 159, 160, 161, 162, 163, 164, 165, 166, 167, 168, 169, 170, 171, 172, 173, 174. 175, 176, 177, 178, 179, 180, 181, 182, 183, 184, 185, 186, 187, 188, 189, 190, 195, 200, 205, and 210°F. The bacon slices may be cooked in a microwave oven to an internal temperature of about 160°F. The bacon slices may be cooked in a microwave oven to an internal temperature of about 165, 170, 175, or 180°F. The bacon slices may be cooked in a searing unit at a flame temperature at about 250-1000°F, 350-1000°F, or 500-1000°F. The bacon slices may be cooked in a searing unit with an air temperature of about 450-500°F.

*Time*-The bacon slices may be cooked in microwave oven for about 5, 10, 15, 20. 25, 30, 35, 40, 45, 40, 55, 60, 65. 70, 75, 80, 85, 90, 95, 100, 105, 110, or 120 seconds. The bacon slices may be cooked in microwave oven for about 80-90 seconds. The bacon slices may be cooked in microwave oven for about 30-150 seconds. The bacon slices may be cooked in microwave oven for about 60-105 seconds. The bacon slices may be cooked in a microwave oven for about 1 minute, 1 minute 30 seconds, 2 minute, 2 minute 30 seconds, 3, 4, 5, 6, 7, 8, 9, or 10 minutes. The bacon slices may be cooked in a microwave oven for about 120 seconds. The bacon slices may be seared in searing unit for about 1, 2, 3, 4, 5, 6, 7, 8, 9, 10, 15, 20, 25, 30, 35, 40, 45, 40, 55, or 60 seconds. The bacon slices may be seared in searing unit for about 3-20 seconds, 4-12 seconds, 6-12 seconds, or about 6-9 seconds. The bacon slices may be seared in a searing unit about 3, 4, 6, 9, 12, or 20 seconds. The bacon slices may be seared in a searing unit about 12 seconds. The bacon slices may be seared in a searing unit for about 1, 1.5, 2, 2.5, 3,4, 5, 6, 7, 8, 9, or 10 minutes.

*Flame intensity*- The searing unit may be arranged to apply flame directly to the bacon slices. The flame may be arranged as to indirectly apply the flame to the bacon slices. The searing unit flames may be adjusted for varying angles relative to the bacon slices. For example, the flames may be applied at an angle of 30°, 60°, 90°, 120°, 150° to the bacon slice. The flames may engulf the top side of the bacon slices. The flames may engulf the bottom side of the bacon slices. The flames may engulf both the top and the bottom side of the bacon slices. The searing unit may be run at about 1.5 to 2.2 million BTU.

*Cure*-The bacon may be treated with a dry cure. A cure may comprise the following ingredients: (1) sugar including but not limited to sucrose, raw sugar, natural sugar, organic sugar, brown sugar, organic cane syrup, organic cane sugar, white sugar, natural brown sugar, muscovado sugar, refined sugar, molasses, confectioners' sugar (powdered sugar), fruit sugar, milk sugar, malt sugar, granulated guar, beet sugar, and superfine (castor) sugar; (2) salt including but not limited to natural salt, natural sea salt, natural rock salt, sea salt, sodium chloride, table salt, natural hand-harvested salt, rare artisan salt, smoked sea salt, and gourmet sea salt); (3) water; (4) a nitrite source including but not limited sodium nitrate, potassium nitrate, sea salt, and vegetable juice powder: (5) liquid smoke; (6) spices (in liquid or powder form); (7) seasonings (in liquid or powder form); (8) sodium erythorbate; and/or (9) any combination of (1)-(8) to form a dry cure. The cure may be injected into a bacon slab using mechanical injector.

*Meat*-Although the description refers to bacon it understood that this is not intended to limit the scope or applicability of the invention. As used herein, the term "bacon" may be made from red meat (*e.g.,* beef, pork, veal, buffalo, and lamb or mutton) and/or poultry meat (*e*.*g*., chicken, turkey, ostrich, grouse, goose, guinea, and duck). The meat used in the present invention can be "organic." "natural," "Kosher," and/or "Halal." In one embodiment, the bacon may be pork, preferably cured pork. The meat can be certified "organic" and/or "natural" by the appropriate state or Federal authorities (*e*.*g*., FDA and USDA) and/or by meeting the appropriate standards set forth by said authorities.

*Cook yield*-The cook yield refers broadly to the weight of the food product at the end of the process compared to the beginning of the process [e.g., (beginning weight/end weight)*100%]. The cook yield of the bacon slices exiting the microwave may be about 35-60%. 45-30%, 35-65%, or 45-50%. The cook yield of the bacon slice exiting the searing unit may be about 28-50%.

Texture Analyzers and analytical instrumentation for testing and measuring the textural and physical characteristics of foods are known in the art. For example Texture Technologies of Scarsdale, NY has a number of probes and fixtures that may be used to test parameters of food characteristics including but not limited to crunchiness, crispness, brittleness, hardness, fracturability, shelf life, and packaging effectiveness. Further, texture may be evaluated using a texture analysis system, such as those available from TexVol instruments of Hagersten Sweden.

### Equipment

The method for simulating pan-fried bacon may comprise an assemblage of equipment comprising a slicer (*e.g.*, a Grote® slicer) with a slicer speed of about 160-210 slices per minute, coupled to a microwave oven (*e.g.,* a Microdry® microwave oven) with a belt speed of about 3-50 feet per minute, 40 feet per minute coupled to a searing machine (*e*.*g*., Cook King® searing unit) with a belt speed of about 3-60 feet per minute, coupled to an interleaver (*e*.*g*., American Machine Works® interleaver) coupled to a packaging machine (*e*.*g*., Multivac) to package the bacon slices.

A number of different types of ovens may be used with the present invention, including microwave ovens, belt grills, and convection ovens. Multiple ovens and combinations of different oven types also may be used with the present invention. In order to provide rapid control of product quality (as described herein) and to eliminate unnecessary handling steps, it is preferred that the oven(s) be a continuous cooking oven rather than being a batch cooking oven. Continuous cooking ovens that process a substantially continuous supply of uncooked bacon into a substantially continuous supply of cooked bacon without interruption of the process, and typically comprise a continuously moving conveyor to carry the bacon into and out of the oven. Furthermore, in order to reduce the complexity of the cooking operation and apparatus and increase the safety of the system, it is also preferred that the oven(s) be able to cook without the addition of fat or oil (or any other supplemental liquid heating medium), agitating the bacon or the use of a pressure or vacuum chamber.

Microwave ovens have been found to provide good control of the cooking rate and quality of the final product, and are preferred. Preferably, a series of microwave ovens are placed end-to-end along the path of the cooking belt. In some cases, multiple ovens may be integrated into a single oven structure containing multiple cooking "cavities" that each contain a cooking unit. These cavities can be thought of as individual ovens, and single "ovens" having multiple cooking cavities are referred to herein as a series of ovens. In a preferred embodiment, a 5-cavity or 2-cavity microwave oven is used, such as those available from Amana Commercial Products Division of Amana, Iowa under the designation QMP2103 RADARLINE. A microwave oven with about 2-5 cavities may be used.

The cooking temperature in each cavity (*i*.*e*., oven) preferably may be adjusted individually to provide an appropriate cooking rate, and the use of microwave ovens provides relatively fast adjustments to cooking parameters. For example, in one embodiment, earlier cavities operate at a higher energy level (typically measured in units of kilowatts) to heat the bacon, while later cavities operate at a lower energy level to prevent overcooking. In a typical operation, the ovens operate to produce temperatures of about 100-210° Fahrenheit, although other temperatures may be used to accelerate or slow the cooking rate. It has been found that factors important to properly adjusting the microwave cavities include, *inter alia*: bacon slice temperature, weight of product per unit area of the belt, and most importantly, the moisture content of the product (often correlated to the leanness of the meat) which can vary greatly from one pork belly to the next.

In order to ensure that the bacon obtains the desired final weight reduction, an iterative, feed-forward or feedback quality control process may be used to measure the bacon slice quality and make corresponding adjustments to the oven(s) performing the cooking. Such quality control steps are desirable because raw bacon slices typically has variable properties, such as moisture content, fat content, and the like, that necessitate periodic or continuous adjustment of the oven(s) to ensure continued high quality output.

The quality control process may comprise weighing a sample of cooked bacon and adjusting the cooking parameters, if the weight is not suitable. Later weight measurements may be used to determine whether additional adjustments are necessary. Of course, any other quality control measurements also may be made to determine whether the bacon slice has the desired weight, color, flavor, texture and the like. Advantageously, the quality control process may be used in conjunction with a continuous cooker to provide relatively rapid control of the output. If the output is found to be unsatisfactory, the oven or ovens may be adjusted to provide better results without sacrificing a large amount of product. This benefit is not possible with batch cooking ovens such as kettle cookers, because the final quality of the bacon is unknown until all of the bacon in the batch is cooked. In another embodiment, the quality control process may also include a pre-cook diagnostic apparatus that determines the amount and/or other characteristics of the bacon that is entering the ovens and automatically adjusts the oven output accordingly. An example of such a device and process is described in U.S. Patent No. 6,157,074. The use of multiple ovens also may allow quality control measurements of the bacon to be taken between the ovens to further improve the quality of the final product. For example, a series of parallel microwave oven-searing unit assemblages may be physically separated for quality control purposes (*e*.*g*., different rooms in the same plant). In this manner, any possible problems may be contained to a single unit and not interfere with the operation of the entire plant.

In contrast to prior methods of cooking bacon, the current method cooks the bacon slices two-step process to a lower internal temperature (*e*.*g*., 160-180°F) and includes a further searing step where the bacon slices, after cooking by microwave the bacon slices are sear cooked at a flame temperature of about 500-1000°F. This imparts a crispy texture and a "pan-fried flavor" which is desirable to consumers and has eluded the art in the past. Imparts "crispy bite similar to pan-fried bacon.

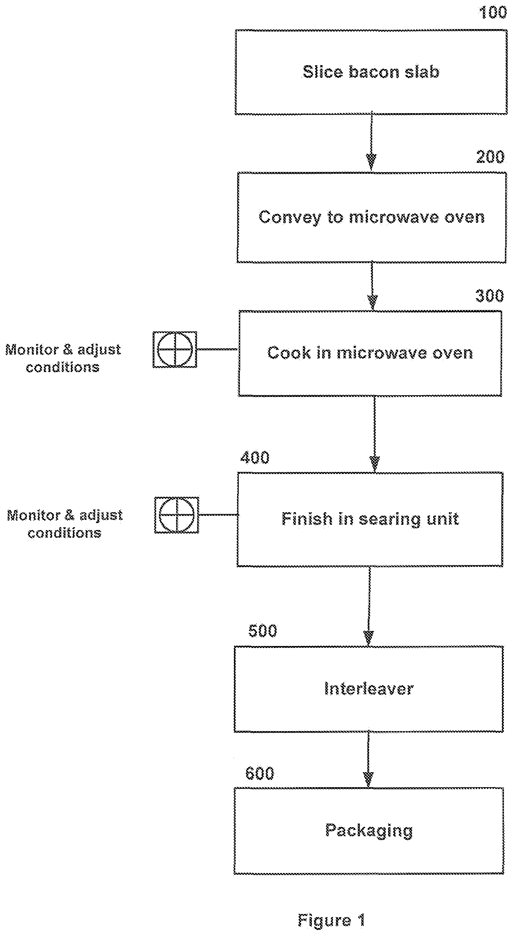

Proceeding now to a description of the drawings, **FIG. 1** shows an exemplary flow-chart for carrying out steps of the process of the present invention. The production of the bacon slab-which may be provided upstream of the shown equipment-is not shown, as such equipment and methods for making a bacon slab are well known in the art. For example, green pork bellies are recieved, optionally skinned, injected with brine/cure, hung, thermally processed in a smokehouse where natural and/or liquid smoke is applied, removed from smokehouse and chilled, pressed, stored in a refrigerated cooler, and then sliced. In **FIG. 1****,** the slicing **100** is shown to include one or more slicing machines **100,** each of which deposits sliced bacon onto a loading conveyor **200.** A single slicing machine **100** is shown, but other slicing machines may deposit bacon slices onto the loading conveyor or other conveyors leading to the microwave over **200.** The loading conveyor terminates at a transversing conveyor where product is uniformly distributed onto a continuous conveyor **201** of the microwave oven **200.** A microwave oven may be used, such as Model No. QMP2103 manufactured by Amana, located in Iowa. Examples of continuous manufacturing processes for cooking bacon are described in U.S. Patent No. 5,999,925.

The method comprises includes placing the bacon slices in file onto a conveyor belt **200.** The slices are arranged in single file, one behind another, or preferably, in rows of two or three slices per row. The conveyor belt transfers the bacon slices to microwave oven **300.** The positioning of the slices may be done by the Grote slicer **100.** Positioning of the cooked bacon slices in file on the conveyor belt **200** can also be accomplished manually, for example, by an operator placing the cooked bacon slices onto marked areas on a conveyor belt. For example, double 3-lane Grote horizontal bandsaws may be used for slicing. A bacon trimmer may be included and can be sized to accommodate the width of the conveyor belt of various types and sizes of cooking devices. The bacon trimmer can be equipped with one or more tractors or similar transferring means, one for each file or line of bacon slices. Further, the equipment assemblages may be vertically tiered (*e*.*g*., stacked on top of each other in different levels) to allow a maximization of the use of plant space.

The energy used in the microwave oven **300** may be generated by a remote microwave generator. In other embodiments, the loading conveyor may terminate at a buffer, collator, shaker deck, or retractable loader. The output from the microwave oven is deposited on another transfer conveyor for being moved toward searing unit **400.** Additionally, thermal imaging, near-infrared (NIR) imaging, sensors, or vision systems may coupled with the microwave oven to allow control of microwave power, belt speed, air flow, and air temperature. Sensors and other control systems may also be coupled with the searing unit **400** to allow monitoring of the production process (*e*.*g*., temperature, flame intensity, air flow).

As product passes through the searing unit **400,** it is seared as discussed herein. The searing unit finishes the microwaved bacon over an open flame at a temperature of about 160-165°F. This imparts a "pan-fried" flavor and creates a crispy bite similar to pan-fried bacon. Additionally, thermal imaging, sensors, or vision systems may coupled with the searing unit to allow control of flame intensity, belt speed, air flow, and air temperature.

Next the seared product is deposited on a interleaver **500** for transport to a packaging machine **600** then to a metal detector **700** and post-packaging **800.** The bacon slices may be placed on parchment paper at about 10-12 slices per sheet. The sheets may be manually stacked in groups of about 10-30 sheets. The stack may be transported to a Multivac packaging machine for sealing in a modified atmosphere package. The packaging machine may be a vertical or horizontal packaging machine including but not limited to a vertical Form/Fill/Seal (VFFS) packaging machine, horizontal Form/Fill/Seal (HFFS) packaging machine, or a premade pouch packaging machine. The packages may be cased, taped, and palletized. Further, the packaging may be modified atmosphere (MAP) or vacuum packed. The cooking area is illustrated in schematic form only, as that equipment, in and of itself, is conventional.

Accordingly, the inventor surprisingly discovered that the combination of the use of microwave oven cooking and finishing in a searing unit unexpectedly produced a bacon slice with similar flavor, odor, color, texture, and flavoring to pan-fried bacon.

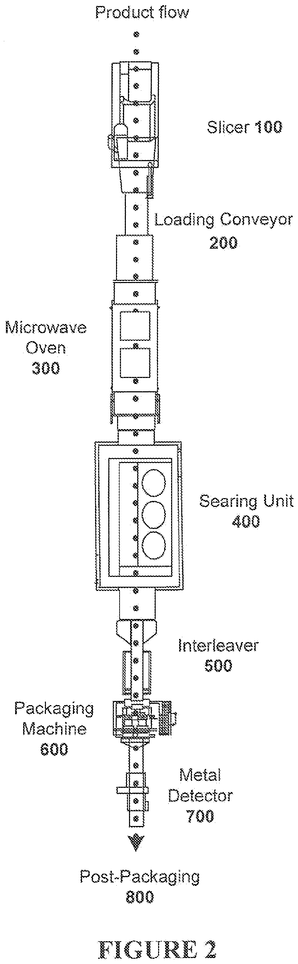

**FIG. 2** shows an exemplary plant lay-out for carrying out steps of the process of the present invention. The production of the bacon slab-which may be provided upstream of the shown equipment-is not shown, as such equipment and methods for making a bacon slab are well known in the art. In **FIG. 1****,** the slicing **100,** loading conveyor **200,** microwave 300, searing unit **400,** interleaver **500,** and packaging unit **600** is shown to include one or more slicing machines **100,** each of which deposits sliced bacon onto a loading conveyor **200.** A single slicing machine **100** is shown, but other slicing machines may deposit bacon slices onto the loading conveyor or other conveyors leading to the microwave over **200.** The loading conveyor terminates at a transversing conveyor where product is uniformly distributed onto a continuous conveyor of the microwave oven **200.** The energy used in the microwave oven **300** may be generated by a remote microwave generator. In other embodiments, the loading conveyor may terminate at a buffer, collator, shaker deck, or retractable loader. The output from the microwave oven is deposited on another transfer conveyor for being moved toward searing unit **400.** As product passes through the searing unit **400**, it is seared as discussed herein. Finally, seared product is deposited on a interleaver **500** for transport to a packaging machine **600** then to a metal detector **700** and post-packaging **800.** The packaging machine may be a vertical or horizontal packaging machine including but not limited to a vertical Form/Fill/Seal (VFFS) packaging machine, horizontal Form/Fill/Seal (HFFS) packaging machine, or a premade pouch packaging machine. Further, the packaging may be modified atmosphere (MAP) or vacuum packed. The cooking area is illustrated in schematic form only, as that equipment, in and of itself, is conventional. Additionally, thermal imaging, sensors, or vision systems may coupled with the microwave oven to allow control of microwave power, belt speed, air flow, and air temperature. The bacon slices in the microwave oven may be cooked to a temperature of about 160-180°F. The microwave energy may be from a generator and supplied in top of the oven.

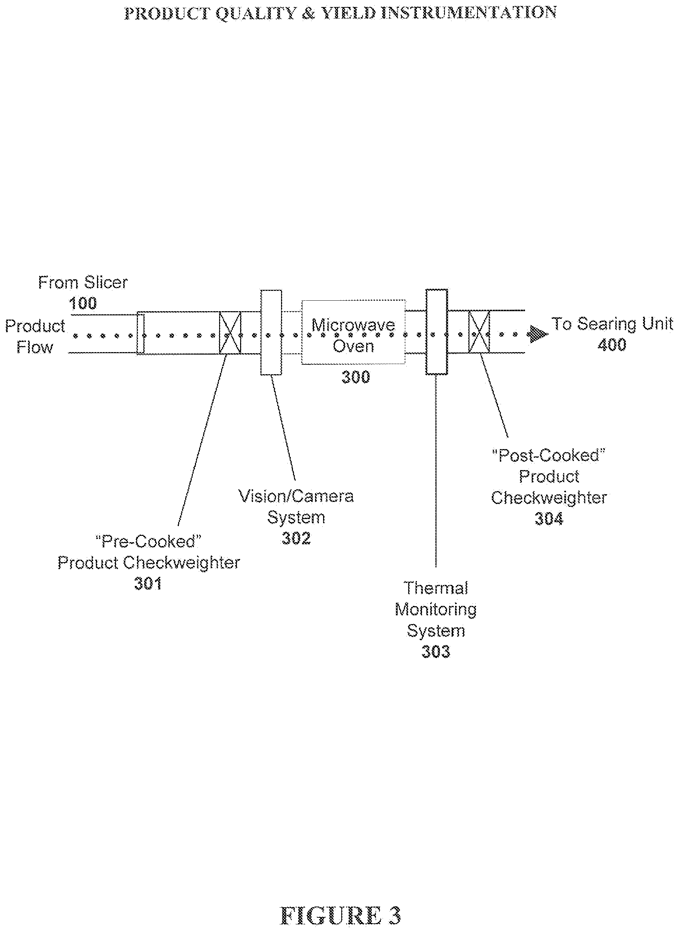

Referring to **Figure 3****,** the microwave energy may be controlled by utilizing inline check weighers **301** (*e*.*g*., at the entrance, middle, and discharge of oven), and/or infrared sensors to monitor the product leaving the oven and feedback to control system to adjust microwave power and/or time the bacon slices are cooked. Additionally, thermal imaging, near-infrared imaging devices, sensors, or vision systems may coupled with the microwave oven to allow control of microwave power, belt speed, air flow, and air temperature. For example, a "pre-dried" product checkweigher **301** may check the weight of the bacon slice after slicing but before cooking in the microwave oven. A vision/camera system **302** may be used prior to entry of the product in the microwave oven for monitoring the product load. After the product exits the microwave oven, thermal monitoring system **303** may be used for monitoring bacon slice quality. A "post-dried" product checkweigher **304** may be used for yield verification prior the bacon slice to be conveyed to the searing unit.

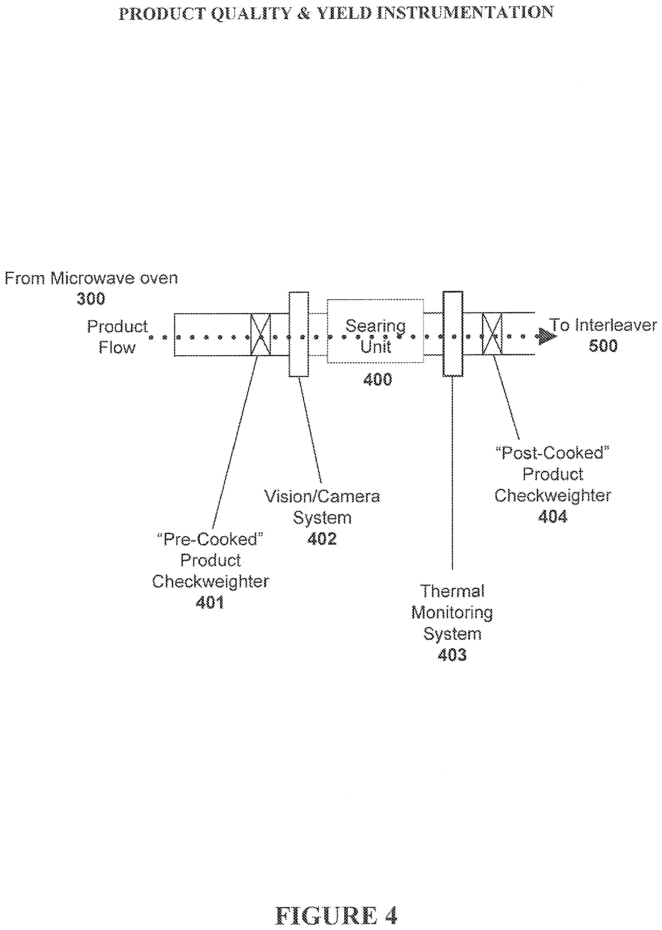

In **FIG. 4****,** the parameters, operating conditions, and product quality in the searing unit may be controlled by utilizing inline checkweighers **401** (*e.g.,* at the entrance, middle, and discharge of searing unit), and/or infrared sensors to monitor the product leaving the searing unit and feedback to control system to adjust flame height, temperature, and/or intensity. Additionally, thermal imaging, sensors, near-infrared (NIR) imaging devices, or vision systems may coupled with the microwave oven to allow control of flame intensity, belt speed, air flow, and temperature. For example, a "pre-dried" product checkweigher **401** may check the weight of the bacon slice after slicing but before finishing in the searing unit. A vision/camera system **402** may be used prior to entry of the product in the searing unit for monitoring the product load. After the product exits the searing unit, thermal monitoring system **403** may be used for monitoring bacon slice quality. A "post-dried" product checkweigher **404** may be used for yield verification prior the bacon slice to be conveyed to the interleaver **500.**

Now that the equipment and the processes have been described in sufficient detail to enable one skilled in the art to practice the preferred form of the invention, it will be even more apparent how variations of time, temperature and humidity may be made by those skilled in the art to take into account a particular processing environment. For example, relatively more heat must be added to the air flow in colder climates, while if processing were to take place in humid, warm environments, such as the southern part of the United States, especially during the summer, additional refrigeration capacity might be needed to lower humidity to a level of below about 60%. The relative humidity of the conditioned air may be below about 30,40, 50, or 60%. For example, the relative humidity of the conditioned air may be about 50-55%. Additionally, the relative humidity of the conditioned air may be about 25%. It may also be necessary to maintain the air in a cooled condition downstream of the refrigeration coils if ambient temperatures are in excess of about 90°F, the upper end of the preferred processing range.

Although certain manufacturers, model names and numbers are given for machinery used in the invention, other machinery may be substituted, as would be appreciated by those skilled in the art.

Further embodiments of the present invention will now be described with reference to the following examples. The examples contained herein are offered by way of illustration and not by any way of limitation.

### EXAMPLES

### EXAMPLE 1

### SIMULATING SEARING OPERATION

A process for the simulating of a searing operation was tested. Using a sample size of approximately 15 pieces with a slice thickness of about 8-9 slices per inch, the microwave product was cooked down to about 45% cook yield. The 45% cooked product was finished in a COOK KING® searing unit. The product was returned for evaluation with times and temperatures. The times ranged from 1 minute to 1 minute and 45 seconds in microwave, 30 seconds to 2 minutes 30 seconds in microwave with 4 seconds to 20 seconds in searing machine, for a total cooking time of about 1 minute to almost three minutes combined (*e.g.,* 120 seconds in the microwave and 6-12 seconds in the searing unit). The product was sampled for taste profile as well as visual appearance. All finished product attributes simulate those of pan-fried bacon.

### EXAMPLE 2

### SIMULATING SEARING OPERATION

A process for the simulating of a searing operation was tested. Using a sample size of approximately 15 pieces with a slice thickness of about 8-9 slices per inch, the microwave product was cooked down to about 45% cook yield. The 45% cooked product was finished in a COOK KING® searing unit. The product was returned for evaluation with times and temperatures. The time for cooking was reduced and the flame intensity was increased with the times ranging from 6-9 seconds with intensified flame coverage. The flame engulfs the top side of the product. The product was sampled for taste profile as well as visual appearance. All finished product attributes simulate those of pan-fried bacon. The test was completed to determine feasibility of placing searing cavity in line with microwave oven cavity from a capacity analysis. The test proved that searing cavity length would be capable of running in line with microwave oven cavity. The samples were sent for cutting and found to achieve desired outcome.

### EXAMPLE 3

### SIMULATING SEARING OPERATION

A process for the simulating of a searing operation was tested. Using a sample size of approximately 15 pieces with a thinner slice thickness of about 14-16 slices per inch, the microwave product was cooked down to about 45% cook yield. The 45% cooked product was finished in a COOK KING® searing unit. The product was returned for evaluation with times and temperatures. The searing cavity was adjusted to accommodate a thinner product. All finished product attributes simulate those of pan-fried bacon.

### EXAMPLE 4

### PAN FRIED BACON TEST

Three packages of 100 count pre-cooked bacon ran through the microwave at a facility to a cook level of approximately 45%. The product was sent to simulate the proposed process and establish run rates based on real time data collection. The following tests were performed over the two day experimental trial.

Pre-cooked bacon off the microwave was reheated in a small conventional microwave to simulate the product coming off an industrial microwave. The product was cooked to an internal temperature of 180°F. The product was then weighed and placed onto the searing machine conveying system. The conveying system was adjusted to a number of different speeds ranging from 60 feet-per-minute (fpm) down to 40 fpm. The flame intensity was adjusted with the different speeds to determine the optimal product temperature and conveying speeds. Flame intensity ranged from about 500 to 1,000°F. Burner configuration was four upper burners and one lower burner. The production yields were calculated to determine shrink for finished product at different flame intensities and dwell times. Flavor profiles were identified and able to be duplicated through the cooking process using dwell times and flame intensities.

This test run established that the simulation of the pan fried bacon flavor was repealable. The different belt speeds and flame intensities influenced the intensity of the flavor. The placement of the burners may be placed closer together to shorten the length of the searing machine. The inventors found that the searing machine belt speeds were adequate to maintain the current microwave throughput. Also, the current product yields could be maintained by adjusting the flame intensity and dwell time. The inventors also found that the bottom burners were not needed to attain desired flavor profile. These results were unexpected because over the last ten years persons working in the field, including the assignee, have made a number of attempts to duplicate the flavor profile associated with pan fried bacon. This process is the most representative of the flavor associated with pan fried bacon and is applicable to industrialization.

## Claims

1. A method for preparing bacon comprising
(a) providing a bacon slab;
(b) slicing the bacon slab into bacon slices;
(c) cooking the bacon slices in a microwave oven for about 30-250 seconds; and
(d) finishing the bacon slices in a cooking searing unit by cooking for about 3-20 seconds, wherein the cooking searing unit is a conveyor cooking searing unit and applies flames directly or indirectly to the bacon slices.

2. The method of claim 1, wherein the microwave oven cooks the bacon slices to an internal temperature of about 37.8-98.9°C (100-210°F), optionally about 15.6-82.2°C (60-180°F), 71.1°C (160°F), or 73.9°C (165°F).

3. The method of claim 1 or 2, wherein said microwave oven is a conveyor microwave oven and the conveyor microwave oven preferably has a belt that moves at about 9.1-18.3 meter per minute (30-60 feet per minute), 9.1-15.2 meter per minute (30-50 feet per minute), or 12.2-12.8 meter per minute (40-42 feet per minute).

4. The method of any one of claims 1 to 3, wherein the cooking searing unit cooks the bacon slices to an internal temperature of about greater than 71.1°C (160°F) or 73.9°C (165°F).

5. The method of any one of claims 1 to 4, wherein the flame temperature of the cooking searing unit is about 148.9-537.8°C (300-1000°F).

6. The method of any one of claims 1 to 5, wherein the cooking searing unit is a conveyor cooking searing unit, wherein the conveyor cooking searing unit preferably has a belt that moves at about 9.1-17.1 meter per minute (30 to 56 feet per minute).

7. The method of any one of claims 1 to 6, wherein a roller press is used.

8. The method of any one of claims 1 to 7, wherein prior to slicing a cure solution is injected into a green pork belly.

9. The method of any one of claims 1 to 8, wherein the microwave oven and/or the cooking searing unit is coupled to a thermal imaging device, sensor, or vision system, near-infrared (NIR) imaging devices, sensors, or vision systems, inline checkweigher, infrared sensor, or a feedback control system.

10. The method of any one of claims 1 to 9, wherein the method further comprises stacking sheets of bacon slices.

11. The method of claim 10, wherein the method further comprises transferring the sheets of bacon slices to a packaging machine for sealing in a modified atmosphere package.

12. The method of any one of claims 1 to 11, wherein a series of parallel microwave oven-searing unit assemblages is used.

13. The method of any one of claims 1 to 12, wherein a multi-cavity microwave oven is used, optionally a 2-cavity or 5-cavity microwave oven.

14. The method of any one of claims 1 to 13, wherein the microwave oven cooks the bacon slices for about 60-105 seconds, 80-90 seconds, or 120 seconds.

15. The method of any one of claims 1 to 14, wherein the cooking searing unit cooks the bacon slices for about 4-12 seconds, 6-9 seconds, or 12 seconds.

16. A system for making pre-cooked bacon comprising
(a) a slicer for slicing bacon slabs;
(b) a microwave oven for cooking bacon slices;
(c) a cooking searing unit for searing bacon slices, wherein the cooking searing unit is a conveyor cooking searing unit and is arranged to apply flames directly or indirectly to bacon slices;
(d) an interleaver for interleaving and stacking the bacon slices; and
(e) a packaging machine for packaging the bacon slices.

17. The system of claim 16, wherein the system comprises a series of parallel microwave oven-searing unit assemblages.

18. The system of claim 16 or 17, wherein the microwave oven is a multi-cavity microwave oven, optionally a 2-cavity or 5-cavity microwave oven.

## Patentansprüche

1. Verfahren zur Zubereitung von Speck, umfassend das
(a) Bereitstellen einer Speckschwarte;
(b) Schneiden der Speckschwarte in Speckscheiben;
(c) Kochen der Speckscheiben in einem Mikrowellenofen für etwa 30-250 Sekunden; und
(d) Fertigstellen der Speckscheiben in einer Koch-Anbrat-Einheit durch Kochen für etwa 3-20 Sekunden, wobei die Koch-Anbrat-Einheit eine Förderband-Koch-Anbrat-Einheit ist und Flammen direkt oder indirekt auf die Speckscheiben anwendet.

2. Verfahren nach Anspruch 1, wobei der Mikrowellenofen die Speckscheiben bei einer internen Temperatur von etwa 37,8-98,9°C (100-210°F), gegebenenfalls von etwa 15,6-82,2°C (60-180°F), 71,1°C (160°F), oder 73,9°C (165°F) kocht.

3. Verfahren nach Anspruch 1 oder 2, wobei der Mikrowellenofen ein Förderband-Mikrowellenofen ist und der Förderband-Mikrowellenofen vorzugsweise ein Förderband hat, welches sich mit etwa 9,1-18,3 Meter pro Minute (30-60 Fuß pro Minute), 9,1-15,2 Meter pro Minute (30-50 Fuß pro Minute), oder 12,2-12,8 Meter pro Minute (40-42 Fuß pro Minute), fortbewegt.

4. Verfahren nach einem der Ansprüche 1 bis 3, wobei die Koch-Anbrat-Einheit die Speckscheiben bei einer internen Temperatur von höher als etwa 71,1°C (160°F) oder 73,9°C (165°F) kocht.

5. Verfahren nach einem der Ansprüche 1 bis 4, wobei die Flammtemperatur der Koch-Anbrat-Einheit etwa 148,9-537,8°C (300-1000°F) ist.

6. Verfahren nach einem der Ansprüche 1 bis 5, wobei die Koch-Anbrat-Einheit eine Förderband-Koch-Anbrat-Einheit ist, wobei die Förderband-Koch-Anbrat-Einheit vorzugsweise ein Förderband hat, welches sich mit etwa 9,1-17,1 Meter pro Minute (30-56 Fuß pro Minute) fortbewegt.

7. Verfahren nach einem der Ansprüche 1 bis 6, wobei eine Walzenpresse verwendet wird.

8. Verfahren nach einem der Ansprüche 1 bis 7, wobei vor dem in Scheiben schneiden eine Pökellösung in einen schlachtfrischen Schweinebauch injiziert wird.

9. Verfahren nach einem der Ansprüche 1 bis 8, wobei der Mikrowellenofen und/oder die Koch-Anbrat-Einheit an ein(en) Wärmebild-Gerät, -Sensor, oder - Erfassungssystem, Nah-Infrarot (NIR)-Bild-Geräte, -Sensoren oder -Erfassungsysteme, Linien-integrierte Kontrollwaage, Infrarotsensor, oder ein rückgekoppeltes Regelungssystem gekoppelt ist.

10. Verfahren nach einem der Ansprüche 1 bis 9, wobei das Verfahren des Weiteren das Stapeln von Speckscheibenplatten umfasst.

11. Verfahren nach Anspruch 10, wobei das Verfahren des Weiteren das Verbringen der Speckscheibenplatten zu einer Verpackungsmaschine zur Versiegelung in einer modifizierten-Atmosphäre-Verpackung umfasst.

12. Verfahren nach einem der Ansprüche 1 bis 11, wobei eine Reihe von parallelen Mikrowellenofen-Anbrat-Einheits-Verbänden verwendet wird.

13. Verfahren nach einem der Ansprüche 1 bis 12, wobei ein Mehrfachhohlraum-Mikrowellenofen, gegebenenfalls ein 2-Hohlraum- oder 5-Hohlraum-Mikrowellenofen, verwendet wird.

14. Verfahren nach einem der Ansprüche 1 bis 13, wobei der Mikrowellenofen die Speckscheiben für etwa 60-105 Sekunden, 80-90 Sekunden, oder 120 Sekunden kocht.

15. Verfahren nach einem der Ansprüche 1 bis 14, wobei die Koch-Anbrat-Einheit die Speckscheiben für etwa 4-12 Sekunden, 6-9 Sekunden, oder 12 Sekunden kocht.

16. System zur Herstellung von vorgekochtem Speck, umfassend
(a) einen Hobel zum in Scheiben schneiden von Speckschwarten;
(b) einen Mikrowellenofen zum Kochen von Speckscheiben;
(c) eine Koch-Anbrat-Einheit zum Anbraten von Speckscheiben, wobei die Koch-Anbrat-Einheit eine Förderband-Koch-Anbrat-Einheit ist und angeordnet ist um Flammen direkt oder indirekt auf die Speckscheiben anzuwenden;
(d) einen Zwischenblatt-Einführer zum Zwischenblatt-Einführen und Stapeln der Speckscheiben; und
(e) eine Verpackungsmachine zum Verpacken der Speckscheiben.

17. System nach Anspruch 16, wobei das System eine Reihe von parallelen Mikrowellenofen-Anbrat-Einheits-Verbänden umfasst.

18. System nach Anspruch 16 oder 17, wobei der Mikrowellenofen ein Mehrfachhohlraum-Mikrowellenofen, gegebenenfalls ein 2-Hohlraum- oder 5-Hohlraum-Mikrowellenofen, ist.

## Revendications

1. Méthode de préparation de bacon comprenant :
(a) l'obtention d'une pièce de bacon ;
(b) le tranchage de la pièce de bacon en tranches de bacon ;
(c) la cuisson des tranches de bacon dans un four à micro-ondes pendant environ 30 à 250 secondes ; et
(d) la finition des tranches de bacon dans une unité de cuisson par grillage, en cuisant pendant environ 3 à 20 secondes, ladite unité de cuisson par grillage étant une unité de cuisson par grillage à convoyeur et appliquant une flamme directement ou indirectement sur les tranches de bacon.

2. Méthode selon la revendication 1, dans laquelle le four à micro-ondes cuit les tranches de bacon à une température interne d'environ 37,8 à 98,9 °C (100 à 210 °F), éventuellement d'environ 15,6 à 82,2 °C (60 à 180 °F), à 71,1 °C (160 °F), ou à 73,9 °C (165 °F).

3. Méthode selon la revendication 1 ou 2, dans laquelle ledit four à micro-ondes est un four à micro-ondes à convoyeur et le four à micro-ondes à convoyeur a de préférence une courroie qui se déplace à environ 9,1 à 18,3 mètres par minute (30 à 60 pieds par minute), 9,1 à 15,2 mètres par minute (30 à 50 pieds par minute), ou 12,2 à 12,8 mètres par minute (40 à 42 pieds par minute).

4. Méthode selon l'une quelconque des revendications 1 à 3, dans laquelle l'unité de cuisson par grillage cuit les tranches de bacon à une température interne supérieure à environ 71,1 °C (160 °F) ou 73,9 °C (165 °F).

5. Méthode selon l'une quelconque des revendications 1 à 4, dans laquelle la température de flamme de l'unité de cuisson par grillage est d'environ 148,9 à 537,8 °C (300 à 1 000 °F).

6. Méthode selon l'une quelconque des revendications 1 à 5, dans laquelle l'unité de cuisson par grillage est une unité de cuisson par grillage à convoyeur, dans laquelle l'unité de cuisson par grillage à convoyeur a de préférence une courroie qui se déplace à environ 9,1 à 17,1 mètres par minute (30 à 56 pieds par minute).

7. Méthode selon l'une quelconque des revendications 1 à 6, dans laquelle une presse à rouleau est utilisée.

8. Méthode selon l'une quelconque des revendications 1 à 7, dans laquelle, avant le tranchage, une solution de saumurage est injectée dans une poitrine de porc crue.

9. Méthode selon l'une quelconque des revendications 1 à 8, dans laquelle le four à micro-ondes et/ou l'unité de cuisson par grillage sont couplés à un dispositif d'imagerie thermique, un capteur, ou un système de vision, des dispositifs d'imagerie dans le proche infrarouge (NIR), des capteurs, ou des systèmes de vision, une balance de contrôle en ligne, un capteur infrarouge, ou un système de rétrocontrôle.

10. Méthode selon l'une quelconque des revendications 1 à 9, ladite méthode comprenant en outre l'empilement de feuilles de tranches de bacon.

11. Méthode selon la revendication 10, ladite méthode comprenant en outre le transfert des feuilles de tranches de bacon à une machine d'emballage pour un scellement dans un emballage à atmosphère modifiée.

12. Méthode selon l'une quelconque des revendications 1 à 11, dans laquelle une série d'assemblages parallèles de four à micro-onde et d'unité de grillage est utilisée.

13. Méthode selon l'une quelconque des revendications 1 à 12, dans laquelle un four à micro-ondes à cavités multiples est utilisé, éventuellement un four à micro-ondes à 2 cavités ou à 5 cavités.

14. Méthode selon l'une quelconque des revendications 1 à 13, dans laquelle le four à micro-ondes cuit les tranches de bacon pendant environ 60 à 105 secondes, 80 à 90 secondes, ou 120 secondes.

15. Méthode selon l'une quelconque des revendications 1 à 14, dans laquelle l'unité de cuisson par grillage cuit les tranches de bacon pendant environ 4 à 12 secondes, 6 à 9 secondes, ou 12 secondes.

16. Système pour préparer du bacon précuit comprenant
(a) un trancheur pour trancher des pièces de bacon ;
(b) un four à micro-ondes pour cuire les tranches de bacon ;
(c) une unité de cuisson par grillage pour griller les tranches de bacon, ladite unité de cuisson par grillage étant une unité de cuisson par grillage à convoyeur et étant agencée de manière à appliquer une flamme directement ou indirectement sur les tranches de bacon ;
(d) un dispositif d'entrelacement pour entrelacer et empiler les tranches de bacon; et
(e) une machine d'emballage pour emballer les tranches de bacon.

17. Système selon la revendication 16, ledit système comprenant une série d'assemblages parallèles de four à micro-onde et d'unité de grillage.

18. Système selon la revendication 16 ou 17, dans lequel le four à micro-ondes est un four à micro-ondes à cavités multiples, éventuellement un four à micro-ondes à 2 cavités ou à 5 cavités.
